Europäisches Patentamt

European Patent Office

Office européen des brevets

(11) Veröffentlichungsnummer: **0 255 084**
A2

(12) # EUROPÄISCHE PATENTANMELDUNG

(21) Anmeldenummer: 87110857.7

(22) Anmeldetag: 27.07.87

(51) Int. Cl.4: **G01L 9/00** , G01L 7/02

(30) Priorität: 30.07.86 DE 3625842

(43) Veröffentlichungstag der Anmeldung:
03.02.88 Patentblatt 88/05

(84) Benannte Vertragsstaaten:
AT BE CH FR GB IT LI

(71) Anmelder: Pfister GmbH
Stätzlinger Strasse 70
D-8900 Augsburg(DE)

(72) Erfinder: Häfner, Hans W.
Fichtenweg 15
D-8890 Aichach(DE)

(74) Vertreter: Kahler, Kurt, Dipl.-Ing.
Postfach 248 Unggenried 17
D-8948 Mindelheim(DE)

(54) Druckmesszelle.

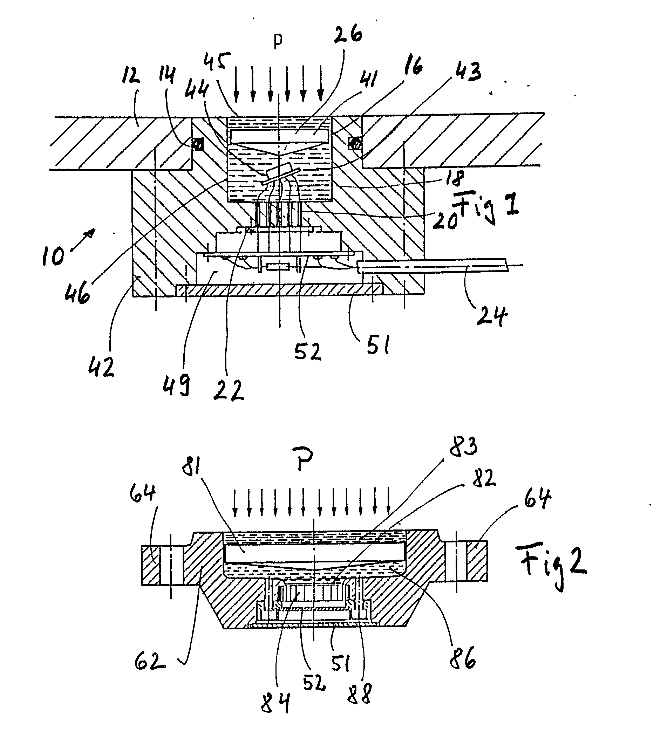

(57) Druckmeßzelle mit einem Drucksensor für hohe Drücke bis zu mehreren 100 bar gekennzeichnet durch ein stabiles, starres, toppförmiges Gehäuse (42) mit einer Vertiefung, deren Durchmesser ein Mehrfaches der Größenabmessung des Drucksensors (44) ist, elastomeres Material (43) das blasenfrei die Vertiefung ausfüllt und in Kontakt mit dem Drucksensor (44) ist und eine Anschlußplatine (52), die abgedichtet in einer Ausnehmung des Gehäuses (42) untergebracht ist und mit Anschlußdrähten (18) des Drucksensors (44) und mit einem Leitungskabel (24) in Verbindung steht (Fig. 1).

Fig. 1

EP 0 255 084 A2

## DRUCKMESSZELLE

Die Erfindung betrifft eine Druckmeßzelle gemäß dem Oberbegriff des Patentanspruches 1.

In jüngster Zeit sind Drucksensoren, etwa piezo-elektrische oder piezo-resistive Drucksensoren entwickelt worden, die zum Messen von Drücken bis zu 400 bar eingesetzt werden können. Derartige Drucksensoren sind äußerst klein, mit Abmessungen von ein oder wenigen Millimetern. Sie sind außerdem empfindlich gegen chemische Einflüsse und Stöße, wie sie beispielsweise beim Messen von Drücken in Förderleitungen für agressive chemische Substanzen bzw. mehr oder weniger große Festpartikel aufweisende Schüttgüter auftreten können. Ein weiteres Problem besteht darin, daß keine ausreichende Kolbenfläche gegeben ist, die eine gleichförmige Druckmessung gestattet. Weitere Schwierigkeiten bestehen bei der Anbringung derartiger Drucksensoren, beispielsweise in meterhohen Tanks oder anderen großdimensionalen Einrichtungen.

Der Erfindung liegt die Aufgabe zugrunde, eine Druckmeßzelle zum Messen sehr hoher Drücke zu schaffen, die resistent gegen chemische Einflüsse und mechanische Schocks ist, eine entsprechende Kolbenfläche zur Aufnahme eines repräsentativen Drucks bietet und einfach und stabil an beliebigen Stellen von druckführenden Einrichtungen anbringbar ist.

Diese Aufgabe wird gelöst durch eine Druckmeßzelle mit den Merkmalen des Kennzeichens des Patentanspruches 1.

Das Metallgehäuse gestattet einen einfachen und stabilen Einbau der Druckmeßzelle, während das elastomere Material den Drucksensor vor äußeren Einflüssen schützt und an seiner Außenseite eine genügend große Kolbenfläche zur Druckaufnahme bietet. Die Anbringung der Anschlußplatine in dem Gehäuse schützt vor Beschädigung der äußerst dünnen Anschlüsse für den Drucksensor.

Bevorzugte Weiterbildungen der erfindungsgemäßen Druckmeßzelle sind in den Unteransprüchen gekennzeichnet.

Weitere Merkmale und Vorteile der erfindungsgemäßen Druckmeßzelle ergeben sich aus der nachfolgenden Beschreibung von Ausführungsbeispielen anhand der Zeichnung. Es zeigen:

Figur 1 eine Schnittansicht einer ersten Ausführungsform einer erfindungsgemäßen Druckmeßzelle mit vollständig eingebettetem Drucksensor und

Figuren 2 - 4 Schnittansichten weiterer Ausführungsformen der erfindungsgemäßen Druckmeßzelle mit eingebautem, in Kontakt mit dem elastomeren Material befindlichen Drucksensor.

Figure 1 zeigt eine erste Ausführungsform einer Druckmeßzelle 10 gemäß der Erfindung mit einem stabilen, starren Gehäuse 42, bevorzugt aus Metall oder Keramik, das über geeignete Dichtungen 14 mit seiner Oberseite plan mit der Innenfläche eines Behälters, einer Leitung oder dgl. 12 eingesetzt ist. Hierbei kann das Gehäuse 42 über geeignete Befestigungsmittel, etwa Schrauben, von außen an der Wand des Behälters oder dgl. 12 befestigt werden.

Das Gehäuse ist topfförmig ausgebildet mit einer Vertiefung 46, die im Vergleich mit den Dimensionen eines in der Vertiefung angeordneten Drucksensors 44 vielfachen Durchmesser besitzt. Bevorzugt ist der Durchmesser der Vertiefung 46 mehr als zehnmal so groß wie der Durchmesser des Drucksensors 44.

Die Vertiefung 46 ist praktisch vollständig mit einem elastomeren Material 43 gefüllt, das beispielsweise Silikongummi sein kann. Bei der Ausführungsform gemäß Figur 1 ist der Drucksensor 44 vollständig von dem elastomeren Material 43 umgeben, und seine Anschlußdrähte 18 sind durch Bohrungen 20 im Boden des Gehäuses 42 aus dem elastomeren Material 43 zu einer Anschlußplatine 52 geführt, die in einer unterseitigen Ausnehmung 49 im Gehäuse 42 angebracht ist. Bei einem Metallgehäuse 42 sind die Bohrungen 20 etwa durch Keramikröhrchen isoliert, die beispielsweise durch eine Isolierplatte 22 auf der Unterseite des Bodens des Gehäuses 42 gehalten werden.

Über ein Kabel 24 lassen sich nun die entsprechenden Anschlußleitungen stabil und bruchsicher herausführen.

Eine Abschlußplatte 51 dichtet die Ausnehmung 49 gegenüber der Umwelt ab.

Im Betrieb drückt ein Druck P auf die durch eine Oberseite 45 des elastomeren Materials 43 gebildete Kolbenfläche, wobei der Druck von dem elastomeren Material 43 gleichförmig an den Drucksensor 44 weitergegeben wird.

Obwohl die Vertiefung 46 vollständig mit elastomerem Material 43 gefüllt sein kann, wird bei dem Ausführungsbeispiel noch ein Kolben 41 verwendet, der mit der Seitenwand der Vertiefung 46 einen geringen Spalt 16 bildet, der mit elastomerem Material 43 gefüllt ist. Der Kolben 41 kann entweder in einem gewissen Abstand von der Oberfläche 45 im elastomeren Material 43 eingebettet sein oder aber über dem elastomeren Material 43 mit seiner Oberseite plan zur Innenwand des Behälters 12 angeordnet sein.

Der Kolben bietet dabei einen Schutz des elastomeren Materials gegen chemische Einflüsse. Er sorgt ferner dafür, daß das elastomere Material 43 blasenfrei hergestellt wird, wie dies beispielsweise in der DE-OS 34 44 996 beschrieben ist. Hierzu ist die Unterseite des Kolbens 41 mit einer Erhöhung, etwa einem Kegel 26, versehen.

Aufgrund der mit der Wand des Behälters 12 planen Oberseite 45 des elastomeren Materials 43 bzw. der planen Oberseite des Kolbens 41 ist der Drucksensor 44 vollkommen geschützt gegen mechanische Beeinträchtigung, beispielsweise bei der Förderung von fluidisierten Schüttgütern.

Es wird darauf hingewiesen, daß der Kolben 41 in der Vertiefung 46 aufgrund des mit elastomerem Material 43 gefüllten Spaltes 16 praktisch reibungsfrei geführt ist, so daß der Druck P über den Kolben 41 vollkommen auf den beispielsweise als Drucksensor-Chip ausgeführten Drucksensor 44 übertragen wird. Die hermetische Einbettung des Drucksensors im blasenfrei eingebrachten elastomeren Material vermeidet die sonst kritische Abstützung der Drucksensorauflage am Druckgehäuse, so daß mit der erfindungsgemäßen Druckmeßzelle höchste Drücke gemessen werden können. Aufgrund der hervorragenden Beständigkeit des Silikongummis und bei entsprechender Werkstoffauswahl des Kolbens 41 und des Gehäuses, bevorzugt aus Keramik oder rostfreiem Stahl, können Drücke in praktisch allen Medien gemessen werden.

Die Figuren 2 bis 4 zeigen weitere Ausführungsformen einer erfindungsgemäßen Druckmeßzelle, bei denen der Drucksensor nicht vollständig eingebettet ist, sondern nur mit seiner Oberfläche mit dem elastomeren Material 43 in Kontakt ist. Eine derartige Anordnung arbeitet beispielsweise bevorzugt mit einem keramischen Drucksensor, der auf mechanische Biegespannungen anspricht.

Da sich die Ausführungsformen der Fig. 2 bis 4 lediglich in der Anordnung des Kolbens 41 unterscheiden, dürfte die Beschreibung der Ausführungsform der Fig. 2 genügen, wobei sich auch diese auf die Abweichungen gemäß Fig. 1 bezieht.

Abweichend von der Ausführungsform nach Fig. 1 ist die Vertiefung 86 an ihrem Boden mit einer zentralen Öffnung 82 versehen, deren Durchmesser bevorzugt geringfügig kleiner ist als der Durchmesser des keramischen Drucksensors 84, der in den Boden des Gehäuses 62 eingelassen ist. Der Drucksensor 84 wird dabei beispielsweise mittels eines Ringes 88 im Boden des Gehäuses 62 fixiert.

Auch hier ergeben sich wiederum die gleichen Vorteile, wie sie bereits im Zusammenhang mit der ersten Ausführungsform beschrieben wurden. Abweichend von der ersten Ausführungsform ist das Gehäuse über mit Bohrungen versehene Flansche 64 an der gewünschten Position zu befestigen.

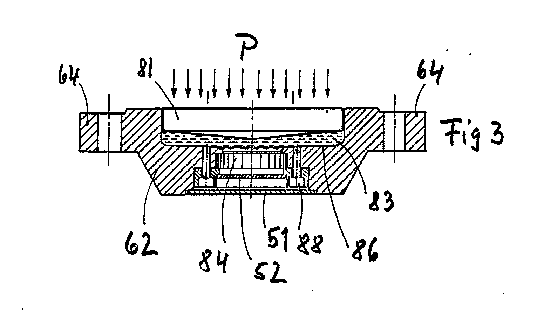

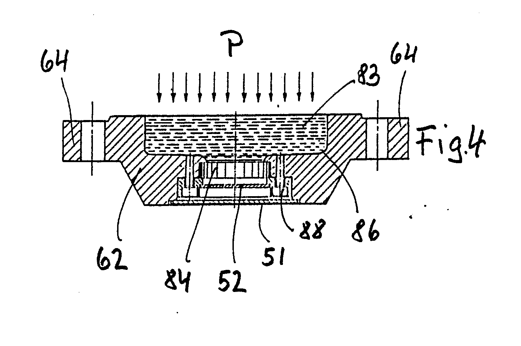

Wie bereits im Zusammenhang mit dem ersten Ausführungsbeispiel erwähnt, kann der Kolben 81 entweder in dem elastomeren Material 83 eingelassen sein (Fig. 2), das elastomere Material nach oben abschließen (Fig. 3) oder überhaupt nicht vorhanden sein (Fig. 4).

Von besonderer Bedeutung für die erfindungsgemäße Druckmeßzelle ist, daß das elastomere Material 43 bzw. 83 blasenfrei ist.

Zur Herstellung der erfindungsgemäßen Druckmeßzelle wird deshalb ein Verfahren verwendet, wie es aus der DE-OS 34 44 996 bekannt ist und wie es beispielsweise auf Kraftmeßzellen angewandt wird, wie es in der internationalen Patentanmeldung PCT/EP 8500691 (WO 86/03584) beschrieben ist. Der Inhalt dieser Druckschriften wird vollständig zum Inhalt der vorliegenden Patentanmeldung gemacht.

Es sei darauf hingewiesen, daß für die erfindungsgemäße Druckmeßzelle die verschiedensten Drucksensoren eingesetzt werden können, etwa Dickschicht-Keramikmembranen, GaAs-Hallgeneratoren, piezoelektrische und piezo-resistive Membranen etc.

Die erfindungsgemäße Druckmeßzelle eignet sich besonders zur verhältnismäßig exakten Bestimmung des Druckes in Flüssigkeiten und Gasen in einem Druckbereich zwischen 2 und 400 bar.

## Ansprüche

1. Druckmeßzelle mit einem Drucksensor für hohe Drücke bis zu mehreren 100 bar gekennzeichnet durch
ein stabiles, starres, topfförmiges Gehäuse (42; 62) mit einer Vertiefung, deren Durchmesser ein Mehrfaches der Größenabmessung des Drucksensors (44, 84) ist, elastomeres Material (43; 83), das blasenfrei die Vertiefung ausfüllt und in Kontakt mit dem Drucksensor (44; 84) ist, und
eine Anschlußplatine (52), die abgedichtet in einer Ausnehmung des Gehäuse (42; 82) untergebracht ist und mit Anschlußdrähten (18) des Drucksensors (44; 84) und mit einem Leitungskabel (24) in Verbindung steht.

2. Druckmeßzelle nach Anspruch 1, dadurch gekennzeichnet, daß die die Vertiefung aufweisende Seite des Gehäuses (42; 62) derart geformt ist, daß die Druckmeßzelle (10) abgedichtet und praktisch ohne wesentliches Überstehen über eine Innenwand eines Behälters, einer Leitung od. dgl. einsetzbar ist und daß am Gehäuse Befestigungsmittel zur Anbringung an den Behälter, der Leitung od. dgl. vorgesehen sind.

3. Druckmeßzelle nach Anspruch 1 oder 2, dadurch gekennzeichnet, daß der Drucksensor (44) vollständig in dem elastomeren Material (43) eingebettet ist und daß seine Anschlußdrähte (18) durch das elastomere Material und isolierte Öffnungen(20) im Gehäuse (42) zur Anschlußplatine (52) geführt sind.

4. Druckmeßzelle nach Anspruch 1 oder 2, dadurch gekennzeichnet, daß die Vertiefung (86) an ihrem Boden eine vornehmlich zentrale Öffnung (82) aufweist, deren Durchmesser geringfügig kleiner ist als der Durchmesser des Drucksensors (84) und daß der Drucksensor (84) von der der Vertiefung (86) gegenüberliegenden Seite derart in das Gehäuse (62) eingebaut ist, daß seine Druckeinleitungsfläche mit dem Elastomer durch die zentrale Öffnung (82) in Kontakt ist.

5. Druckmeßzelle nach einem der vorhergehenden Ansprüche, dadurch gekennzeichnet, daß in dem elastomeren Material (43, 83) oder dieses von der Druckeinleitungsseite her abdeckend ein Kolben (41; 81) eingesetzt ist, der mit der zylindrischen Seitenwand der Vertiefung (46) einen - schmalen Spalt (16) bildet, der mit elastomerem Material gefüllt ist.

6. Druckmeßzelle nach Anspruch 5, dadurch gekennzeichnet, daß der Kolben (41; 81) zum Inneren der Vertiefung (46; 86) hin kegelförmig ausgebildet ist.

7. Druckmeßzelle nach Anspruch 5, dadurch gekennzeichnet, daß der Kolben (41; 81) zum Inneren der Vertiefung (46; 86) hin mit einer kegeligen Vertiefung versehen ist, deren Spitze über eine verschließbare Bohrung mit der Oberseite des Kolbes in Verbindung steht.

8. Druckmeßzelle nach einem der vorhergehenden Ansprüche, dadurch gekennzeichnet, daß das Gehäuse aus Metall oder Keramik hergestellt ist.

9. Verfahren zum Herstellen einer Druckmeßzelle nach einem der vorhergehenden Ansprüche, dadurch gekennzeichnet, daß ein Verfahren gemäß der internationalen Patentanmeldung WO/8603584 verwendet wird.

Fig 1

Fig 2

Fig 3

Fig.4